# EUROPEAN PATENT SPECIFICATION

(11) **EP 1 957 776 B1**
(45) Date of publication and mention of the grant of the patent: **25.03.2009**
(21) Application number: 05819927.4
(22) Date of filing: 29.11.2005
(51) Int. Cl.: F02D 21/08

(54) **EXHAUST GAS RECIRCULATION SYSTEM AND METHOD FOR CLEANING SUCH A SYSTEM**
ABGASRÜCKFÜHRSYSTEM UND VERFAHREN ZUR REINIGUNG EINES DERARTIGEN SYSTEMS
SYSTEME DE RECIRCULATION DES GAZ D'ECHAPPEMENT ET PROCEDE DE NETTOYAGE D'UN TEL SYSTEME

(43) Date of publication of application: 20.08.2008
(73) Proprietor: RENAULT TRUCKS, 69800 St Priest (FR)
(72) Inventor: AIXALA, Luc, F-69510 Soucieu-en-Jarrest (FR)
(74) Representative: Putet, Gilles
(86) International application number: PCT/EP2005/013984
(87) International publication number: WO 2007/062682

(56) References cited:
- PATENT ABSTRACTS OF JAPAN vol. 1998, no. 13, 30 November 1998 (1998-11-30) & JP 10 213020 A (ISUZU MOTORS LTD), 11 August 1998 (1998-08-11)
- PATENT ABSTRACTS OF JAPAN vol. 1999, no. 09, 30 July 1999 (1999-07-30) & JP 11 093781 A (ISUZU MOTORS LTD), 6 April 1999 (1999-04-06)
- PATENT ABSTRACTS OF JAPAN vol. 1999, no. 14, 22 December 1999 (1999-12-22) & JP 11 257167 A (NISSAN DIESEL MOTOR CO LTD), 21 September 1999 (1999-09-21)
- PATENT ABSTRACTS OF JAPAN vol. 2003, no. 12, 5 December 2003 (2003-12-05) & JP 2003 293865 A (HONDA MOTOR CO LTD), 15 October 2003 (2003-10-15)

## Description

### TECHNICAL FIELD OF THE INVENTION

This invention concerns an exhaust gas recirculation system for an internal combustion engine. It also concerns an internal combustion engine equipped with such a system and an automotive vehicle equipped with such an engine. Finally, the invention concerns a method for cleaning an exhaust gas re-circulation system.

### BACKGROUND ART OF THE INVENTION

It is known, e.g. from US-B-6 659 090, to use exhaust gas recirculation means (EGR means) on an internal combustion engine to re-direct a part of the exhaust gases towards the cylinders of the engine in order to reduce NOₓ emissions and to comply with future anti-pollution regulations. Such EGR means generally include an exhaust gas cooler used to lower the temperature of the exhaust gases prior to sending them back to the engine. When the engine is stopped, the exhaust gases trapped in the EGR cooler cool down and some impurities present in these gases form a deposit or stains, e.g. a sulphur deposit, on the inside parts or walls of the cooler. Such a deposit or stain causes oxidation of the internal parts or walls of the cooler. This oxidation might result in defective working of the cooler. In particular, exhaust gases might come into contact with parts of the engine located in the vicinity of the cooler of even with the cooling medium circulating through the cooler.

JP-A-10 213 020 discloses an EGR device where new air can flow from an inlet line of an engine to an exhaust gas cooler. This device works only when the engine is running. Air is provided to the cooler under relatively low pressure, which induces that cleaning is not efficient, with the same consequences as here-above.

### SUMMARY OF THE INVENTION

The invention aims at providing an exhaust gas recirculation system whose gas cooler has a longer life-time.

To this aim, the invention concerns an exhaust gas recirculation system for an internal combustion engine, this system comprising an exhaust gas cooler, a source of fresh air under pressure and a fresh air injection line connecting this source to this cooler, characterized in that said source of fresh air is a tank.

Thanks to the connexion line, it is possible to inject into the exhaust gas cooler some fresh air provided by the tank when the engine is being turned off. This allows efficient cleaning of the inside volume of the cooler, so that sulphur deposits or other deposits or stains are avoided.

According to further aspects of the invention, an exhaust gas recirculation system might incorporate one or several of the following features :
- A check valve incorporated into the air injection line prevents gas flow from the cooler to the source of air.
- A valve incorporated into the air injection line controls air flow between said source and said cooler.
- The tank also forms a source of fresh air under pressure for accessories or auxiliary equipments of the vehicle.

The invention also concerns an internal combustion engine equipped with an exhaust gas recirculation system as mentioned here-above.

The invention also concerns an automotive vehicle, in particular a truck, equipped with an engine as mentioned here-above.

The invention also concerns a method for cleaning an exhaust gas recirculation system of an internal combustion engine, this system comprising an exhaust gas cooler. This method includes a step of injecting fresh air under pressure into the cooler when the engine is being turned off. It is characterized in that fresh air is injected into the cooler from a tank of air under pressure.

Advantageously, the injection of fresh air takes place every time that the engine is being turned off.

In another method according to the invention fresh air injection takes place, from a tank of air under pressure, when the engine is running.

Moreover, in both methods, during fresh air injection, a valve, which controls the percentage of exhaust gas recirculation when the engine runs, is advantageously set to a close position, which prevents fresh air injected into the cooler to flow towards the exhaust collector of the engine.

### BRIEF DESCRIPTION OF THE DRAWINGS

The invention will be better understood on the basis of the following description, which is given in correspondence with the annexed figures and as an illustrative example, without restricting the object of the invention. In the annexed figures :
- figure 1 is a scheme of an internal combustion engine equipped with an exhaust gas recirculation system according to the invention, in a configuration where the engine runs.

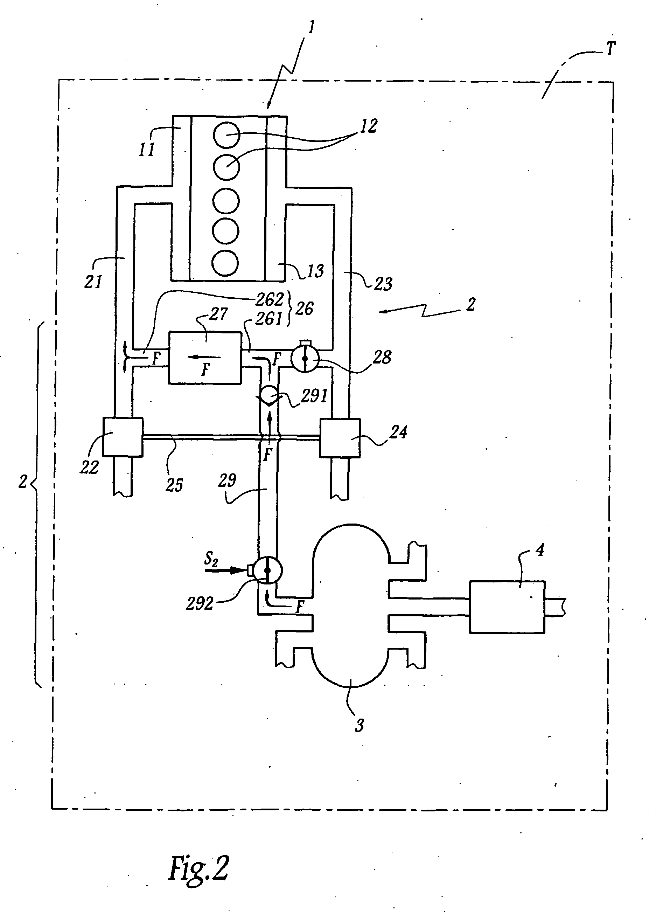

- figure 2 is a scheme similar to figure 1, when the engine is being turned off.

### DETAILED DESCRIPTION OF ONE EMBODIMENT

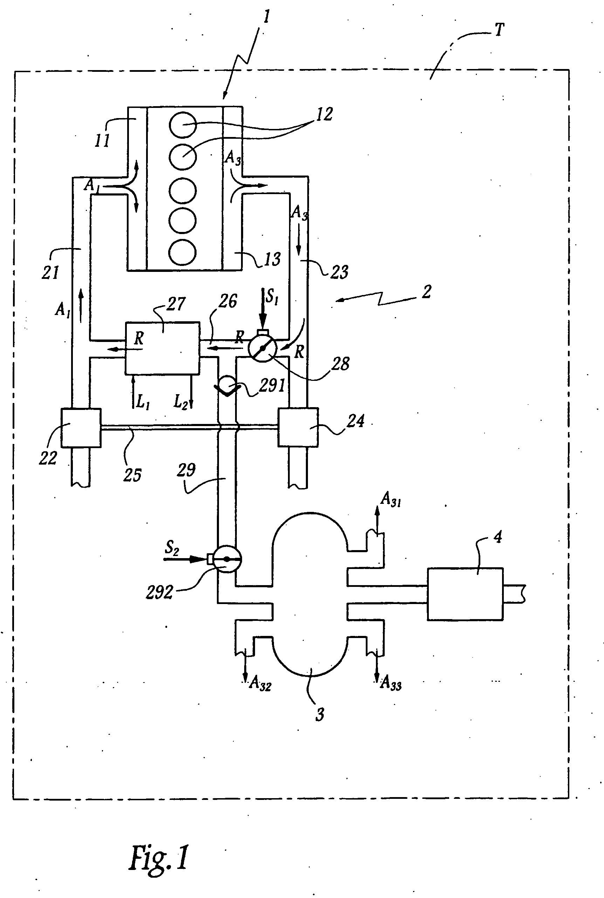

The Diesel engine 1 represented on figure 1 is mounted onto a truck T and equipped with an exhaust gas recirculation system or "EGR" system. The EGR system 2 comprises a first line 21 which feeds an air inlet collector 11 of engine 1 with air to be used during fuel combustion in the cylinders 12 of engine 1 as shown by arrows A₁.

Air in line 21 is brought to the pressure required to feed collector 11 by a compressor 22.

An air outlet collector 13 of motor 1 is connected to an exhaust line 23 in which a turbine 24 sucks air from collector 13 as shown by arrows A₃.

Compressor 22 and turbine 23 are connected by a rigid shaft 25 and belong to the same structural unit called "turbocompressor". A derivation line 26 connects line 23, upstream of turbine 24, to line 21, downstream of compressor 22. An exhaust gas cooler 27 is mounted on line 26 and lowers the temperature of gases coming from line 23 and going to line 21.

Cooler 27 is a liquid/gas heat exchanger fed with a liquid cooling medium, as shown by arrow L₁, this medium being evacuated from this cooler as shown by arrow L₂. According to a further embodiment of the invention, cooler 27 can be a gas/gas heat exchanger. In such a case, the cooling medium is a gas.

A proportional control valve 28 is mounted on line 26, upstream of cooler 27 and is used to control the percentage of exhaust gases directed to cooler 27 and line 21, as shown by arrows R, with respect to the total quantity of exhaust gases circulating in exhaust line 23. For this purpose, control valve 28 is controlled by a signal S₁ provided by a non represented electronic control unit (ECU) of engine 1.

On the truck T, a tank 3 is provided to store air under pressure, the pressure of this air being increased from atmospheric pressure to about 10 bars thanks to a compressor 4. Air of tank 3 is used to actuate or feed accessories or auxiliary equipments of the truck such as a braking assistance system, a pneumatic suspension system or a tyre pressure control system, as represented by arrows A₃₁, A₃₂ and A₃₃.

A fresh air injection line 29 connects tank 3 to an upstream portion 261 of line 26 located between valve 28 and cooler 27. In other words, line 29 connects tank 3 to the volume of cooler 27 where exhaust gases circulate, as shown by arrow R on figure 1.

A check valve 291 is mounted on line 29 and prevents flow of exhaust gases from line 26 to line 29 and tank 3.

A control valve 292 is incorporated in line 29. It allows or blocks air flow in line 29, on the basis of a control signal S₂ received from the ECU.

When engine 1 runs, as represented on figure 1, EGR system 2 provide collector 11 with a part of the exhaust gases flowing in line 23, the proportion of exhaust gases redirected to cooler 27 and line 21, as shown by arrows R, being controlled by valve 28 piloted with signal S₁. Signal S₂ pilots valve 291 to close line 29.

When the engine is turned off, signal S₁ pilots valve 28 to close the communication between line 23 and portion 261 of line 26. Then, control signal S₂ is applied to valve 292 to open the communication between tank 3 and portion 261 of line 26, which induces that a quantity of fresh air flows from tank 3 to line 21 through valve 292 line 29, check valve 291, portion 261, cooler 27 and the downstream portion 262 of line 26, as shown by arrows F.

Such a flow F of air cleans the inside volume of cooler 27 where exhaust gases circulate when engine 1 runs. This prevents depositions or stains of solid particles, like sulphur particles, which are blown away by the flow F of air coming from tank 3. This avoids oxidation of the internal parts or walls of cooler 27.

Flow of air F also cleans lines 26 and 21, which also prevents deposits in these parts of EGR system 2.

Preferably, signal S₂ is applied to valve 292 every time that engine 1 is turned off, so that cleaning of cooler 27 and lines 21 to 26 takes place every time that engine 1 is turned off.

However, one can consider a method where cleaning of cooler 27 takes place in function of several parameters, e.g. a pre-determined number of hours of working of engine 1 since the last cleaning or the temperature of the engine.

Since cleaning of cooler 27 takes place when engine 1 is turned off, the pressure in tank 3 is high, in the order of 10 bars, because compressor 4 has just filled tank 3 during working of engine 1. This relatively high pressure of fresh air facilitates cleaning of cooler 27 since pressure in lines 26 to 21 is generally lower than 6 bars.

According to another approach, cleaning of cooler 27 can also take place when engine 1 is running since pressure in tank 3 is available as soon as the engine runs. In particular, cleaning can take place when the engine is running at idling speed or at partial load, or after a predetermined duration of operation. Control of the cleaning operation is made by an electronic control unit mounted onto truck T.

In this case also, during fresh air injection, valve 28 is set to a closed position.

Tank 3 and compressor 4 are equipments that are usually provided on a truck in order to feed accessories or auxiliary equipments, so that using the invention on a truck does not substantially increase its manufacturing cost since only line 29 and valves 291 and 292 have to be added with respect to most trucks equipped with an EGR system.

Valve 291 is optional and one can control the flow of air in line 29 with valve 292 only.

Insofar as check-valve 291 is used, valve 292 can be omitted, in particular if tank 3 includes means to control air flow towards the outside of tank 3 or if independent means are provided to control compressor 4.

The invention has been represented with respect to a truck T whose engine is equipped with an EGR system. However, it can also be used for other automotive vehicles equipped with such a system. The engine equipped with the EGR system can be any kind of internal combustion engine.

### LIST OF REFERENCES

1 engine
   11 air inlet collector
   12 cylinder
   13 air outlet collector
2 EGR system
   21 feeding line
   22 compressor
   23 exhaust line
   24 turbine
   25 shaft
   26 derivation line
      261 upstream portion
      262 downstream portion
   27 exhaust gas cooler
   28 control valve
   29 fresh air injection line
      291 check valve
      292 control valve
3 tank
4 compressor

A₁ arrows (air flow)
A₃ arrows (air flow)
A₃₁, A₃₂, A₃₃ arrows (air flow from tank 3)
F flow of fresh air from tank 3 to cooler 27
L₁ arrow (cooling medium flow)
L₂ arrow (cooling medium flow)
R arrow (exhaust gas re-circulation flow)
S₁ signal
S₂ signal
T truck

## Claims

1. An exhaust gas recirculation system (2) for an internal combustion engine (1), said system comprising an exhaust gas cooler (27), a source (3) of fresh air under pressure and a fresh air injection line (29) connecting said source to said cooler **characterized in that** said source of air is a tank (3).

2. System according to claim 1 **characterized in that** a check valve (291) incorporated into said air injection line (29) prevents gas flow (F) from said cooler (27) to said source of air (3).

3. System according to one of claims 1 or 2 **characterized in that** a valve (292) incorporated into said air injection line (29) controls air flow (F) between said source of air (3) and said cooler (27).

4. System according to one of claims 1 to 3, **characterized in that** said tank (3) forms a source of fresh air under pressure for accessories or auxiliary equipments of an automotive vehicle (T) equipped with said system (2).

5. System according to claim 4, **characterized in that** said tank (3) forms a source of fresh air for a braking assistance system of said automotive vehicle (T).

6. System according to any of claims 1 to 5, **characterized in that** said tank (3) includes air having a pressure up to about 10 bars.

7. An internal combustion engine (1) equipped with an exhaust gas recirculation system (2) according to one of the previous claims.

8. An automotive vehicle (T) equipped with an engine (1) according to claim 7, said tank (3) forming a source of fresh air under pressure (A₃₁-A₃₃) for accessories or auxiliary equipments of said vehicle.

9. A method for cleaning an exhaust gas recirculation system (2) of an internal combustion engine (1), said system comprising an exhaust gas cooler (27), said method including a step of injecting fresh air (F) under pressure into said cobler (27) when said engine is being turned off, **characterized in that** fresh air is injected into said cooler (27) from a tank (3) of air under pressure.

10. Method according to claim 9 **characterized in that** said fresh air injection step (F) takes every time said engine (1) is being turned off.

11. A method for cleaning an exhaust gas recirculation system (2) of an internal combustion engine (1), said system comprising an exhaust gas cooler (27), said method including a step of injecting fresh air (F) under pressure into said cooler (27) when said engine is running, **characterized in that** fresh air is injected into said cooler (27) from a tank (3) of air under pressure.

12. Method according to one of claims 9 to 11 **characterized in that,** during said fresh air injection step (F), a valve (28), which controls the percentage of exhaust gas recirculation when said engine (1) runs, is set to a closed position.

13. Method according to one of claims 9 to 12, **characterized in that** air in said tank (3) is also used to actuate or feed (A₃₁-A₃₂) accessories or auxiliary equipments of an automotive vehicle (T).

14. Method according to claim 13, **characterized in that** air in said tank (3) is used to actuate or feed (A₃₁) a braking assistance system of said automotive vehicle (T).

15. Method according to one of claims 9 to 14, **characterized in that** air pressure within said tank is increased to about 10 bars.

## Patentansprüche

1. Abgasrückführungssystem (2) für einen Verbrennungsmotor (1), wobei das System einen Abgaskühler (27), eine Quelle (3) für Frischluft unter Druck und eine Frischlufteinspeisleitung (29) umfasst, die die Quelle mit dem Kühler verbindet, **dadurch gekennzeichnet, dass** die Luftquelle ein Tank (3) ist.

2. System nach Anspruch 1, **dadurch gekennzeichnet, dass** ein in die Lufteinspeisleitung (29) eingebautes Rückschlagventil (291) eine Gasströmung (F) von dem Kühler (27) zu der Luftquelle (3) verhindert.

3. System nach einem der Ansprüche 1 oder 2, **dadurch gekennzeichnet, dass** ein in die Lufteinspeisleitung (29) eingebautes Ventil (292) eine Luftströmung (F) zwischen der Luftquelle (3) und dem Kühler (27) steuert.

4. System nach einem der Ansprüche 1 bis 3, **dadurch gekennzeichnet, dass** der Tank (3) eine Quelle von Frischluft unter Druck für Zubehör oder Hilfsausstattungen eines Kraftfahrzeugs (T) bildet, das mit dem System (2) ausgestattet ist.

5. System nach Anspruch 4, **dadurch gekennzeichnet, dass** der Tank (3) eine Frischluftquelle für ein Bremsassistenzsystem des Kraftfahrzeuges (T) bildet.

6. System nach einem der Ansprüche 1 bis 5, **dadurch gekennzeichnet, dass** der Tank (3) Luft mit einem Druck bis zu ungefähr 10 Bar enthält.

7. Verbrennungsmotor (1), der mit einem Abgasrückführungssystem (2) nach einem der vorhergehenden Ansprüche ausgestattet ist.

8. Kraftfahrzeug (T), das mit einem Motor (1) nach Anspruch 7 versehen ist, wobei der Tank (3) eine Quelle von Frischluft unter Druck (A₃₁-A₃₃) für Zubehör oder Hilfsausstattungen des Fahrzeugs bildet.

9. Verfahren zum Reinigen eines Abgasrückführungssystems (2) eines Verbrennungsmotors (1), wobei das System einen Abgaskühler (27) umfasst, wobei das Verfahren den Schritt der Einspeisung von Frischluft (F) unter Druck in den Kühler (27) umfasst, wenn der Motor abgeschaltet ist, **dadurch gekennzeichnet, dass** die Frischluft in den Kühler (27) aus einem Tank (3) mit Luft unter Druck eingespeist wird.

10. Verfahren nach Anspruch 9, **dadurch gekennzeichnet, dass** der Frischlufteinspeisschritt (F) immer dann stattfindet, wenn der Motor (1) abgeschaltet wird.

11. Verfahren zum Reinigen eines Abgasrückführungssystems (2) eines Verbrennungsmotors (1), wobei das System einen Abgaskühler (27) umfasst, wobei das Verfahren einen Schritt der Einspeisung von Frischluft (F) unter Druck in den Kühler (27) umfasst, wenn der Motor läuft, **dadurch gekennzeichnet, dass** Frischluft in den Kühler (27) aus einem Tank (3) mit Luft unter Druck eingespeist wird.

12. Verfahren nach einem der Ansprüche 9 bis 11, **dadurch gekennzeichnet, dass** während dem Frischlufteinspeisschritt (F) ein Ventil (28), das den Prozentanteil der Abgasrückführung steuert, während der Motor (1) läuft, in eine geschlossene Position gesetzt wird.

13. Verfahren nach einem der Ansprüche 9 bis 12, **dadurch gekennzeichnet, dass** Luft in dem Tank (3) außerdem zur Betätigung oder Speisung (A₃₁-A₃₂) von Zubehör oder Hilfsausstattungen des Kraftfahrzeugs (T) verwendet wird.

14. Verfahren nach Anspruch 13, **dadurch gekennzeichnet, dass** Luft in dem Tank (3) zur Betätigung oder Speisung (A₃₁) eines Bremsassistenzsystems des Kraftfahrzeugs (T) verwendet wird.

15. Verfahren nach einem der Ansprüche 9 bis 14, **dadurch gekennzeichnet, dass** der Luftdruck in dem Tank auf ungefähr 10 Bar erhöht wird.

## Revendications

1. Un système de recirculation des gaz d'échappement (2) pour un moteur à combustion interne (1), ledit système comprenant un refroidisseur de gaz d'échappement (27), une source (3) d'air frais sous pression et une ligne (29) d'injection d'air frais reliant ladite source audit refroidisseur **caractérisé en ce que** ladite source d'air est un réservoir (3).

2. Système selon la revendication 1, **caractérisé en ce qu'**une valve anti-retour (291) incorporée dans ladite ligne d'injection d'air (29) empêche un flux de gaz (F) dudit refroidisseur (27) vers ladite source d'air (3).

3. Système selon l'une des revendications 1 ou 2, **caractérisé en ce qu'**une valve (292) incorporée dans ladite ligne d'injection d'air (29) contrôle le flux d'air entre ladite source d'air etle dit refroidisseur (27).

4. Système selon l'une des revendications 1 à 3, **caractérisé en ce que** ledit réservoir (3) forme une source d'air frais sous pression pour des accessoires ou des équipements auxiliaires d'un véhicule automobile (T) équipé avec ledit système (2).

5. Système selon la revendication 4, **caractérisé en ce que** ledit réservoir (3) forme une source d'air frais pour un système d'assistance de freinage dudit véhicule automobile (T).

6. Système selon l'une quelconque des revendications 1 à 5, **caractérisé en ce que** ledit réservoir (3) comporte de l'air ayant une pression allant jusqu'à environ 10 bars.

7. Un moteur à combustion interne (1) équipé avec un système de recirculation des gaz d'échappement (2) selon l'une des revendications précédentes.

8. Un véhicule automobile (T) équipés avec un moteur (1) selon la revendication 7, ledit réservoir (3) formant une source d'air frais sous pression (A₃₁-A₃₃) pour des accessoires ou des équipements auxiliaires dudit véhicule.

9. Une méthode pour nettoyer un système de recirculation des gaz d'échappement (2) d'un moteur à combustion interne (1), ledit système comprenant un refroidisseur de gaz d'échappement (27), ladite méthode comportant une étape d'injection d'air frais (F) sous pression dans ledit refroidisseur (27) lorsque ledit moteur est arrêté, **caractérisée en ce que** l'air frais est injecté dans ledit refroidisseur (27) en provenance d'un réservoir (3) d'air sous pression.

10. Méthode selon la revendication 9, **caractérisée en ce que** ladite étape d'injection d'air frais (F) a lieu à chaque fois que ledit moteur (1) est arrêté.

11. Une méthode pour nettoyer un système de recirculation des gaz d'échappement (2) d'un moteur à combustion interne (1), ledit système comprenant un refroidisseur de gaz d'échappement (27), ladite méthode comportant une étape d'injection d'air frais (F) sous pression dans ledit refroidisseur (27) lorsque ledit moteur est en fonction, **caractérisée en ce que** l'air frais est injecté dans ledit refroidisseur (27) en provenance d'un réservoir (3) d'air sous pression.

12. Méthode selon l'une des revendications 9 à 11, **caractérisée en ce que,** pendant l'étape d'injection d'air frais (F), une valve (28), qui contrôle le pourcentage de recirculation des gaz d'échappement lorsque le moteur (1) est en fonction, est amenée à une position fermée.

13. Méthode selon l'une des revendications 9 à 12, **caractérisée en ce que** l'air dans ledit réservoir (3) est aussi utilisé pour actionner ou alimenter (A₃₁-A₃₂) des accessoires ou des équipements auxiliaires d'un véhicule automobile (T).

14. Méthode selon la revendication 13, **caractérisée en ce que** l'air dans ledit réservoir (3) est utilisé pour actionner ou alimenter un système d'assistance de freinage dudit véhicule automobile (T).

15. Méthode selon l'une des revendications 9 à 14, **caractérisée en ce que** la pression d'air avec ledit réservoir est accrue jusqu'à environ 10 bars.
